Europäisches Patentamt

European Patent Office

Office européen des brevets

(19)

(11) Veröffentlichungsnummer: **0 408 777 A1**

(12) **EUROPÄISCHE PATENTANMELDUNG**

(21) Anmeldenummer: 89113079.1

(22) Anmeldetag: 17.07.89

(51) Int. Cl.⁵: **B60H 1/24, B60S 1/54**

(43) Veröffentlichungstag der Anmeldung:
**23.01.91 Patentblatt 91/04**

(84) Benannte Vertragsstaaten:
**DE FR GB IT**

(71) Anmelder: **AURORA Konrad G. Schulz GmbH
& Co Co
Südring 4
D-6933 Mudau/Odenwald(DE)**

(72) Erfinder: **Thelen, Werner
Löserweg 5
D-6967 Buchen(DE)**

(74) Vertreter: **Baronetzky, Klaus et al
Patentanwalte Dipl.-Ing. R. Splanemann, Dr.
B. Reitzner, Dipl.-Ing. K. Baronetzky Tal 13
D-8000 München 2(DE)**

(54) **Heizungs-, Belüftungs- und/oder Klimatisierungsvorrichtung.**

㉗ Bei einer Heizungs-, Belüftungs- und/oder Klimatisierungsvorrichtung (10) eines eine Kabine (22) aufweisenden Kraftfahrzeugs (24) sind ein Gebläse (12) und eine Düseneinrichtung zur Belüftung der Frontscheibe (34) von Seitenfenstern so angeordnet, daß durch einen sich entlang der Vorderwand der Kabine (32) erstreckenden, flachen Druckverteilraum (18) ein Druckkanal (14) gebildet wird, der oben und seitlich in einem durchgehenden oder geteilten Spalt (32) ausläuft.

FIG. I

EP 0 408 777 A1

## HEIZUNGS-, BELÜFTUNGS- UND/ODER KLIMATISIERUNGSVORRICHTUNG

Die Erfindung betrifft eine Heizungs-, Belüftungs- und/oder Klimatisierungsvorrichtung eines eine Kabine aufweisenden Kraftfahrzeugs, gemäß dem Oberbegriff von Anspruch 1.

Bei Kabinenfahrzeugen wie Erntemaschinen, Traktoren, Baumaschinen und dgl. sind bislang zwei unterschiedliche Prinzipien bekannt geworden, um die Heizung, Belüftung und ggf. Klimatisierung sicherzustellen: Gemäß einer Alternative wurde die komplette Heizungs- und Belüftungsanlage ins Dach des Kabinenfahrzeugs verlegt, und gemäß der anderen Alternative hat man das Gebläse im unteren Bereich der Kabine angeordnet, häufig unter dem Fahrersitz oder an einer anderen geeigneten Stelle, und von dort lange Luftleitungen mit je entsprechenden Düsenmundstücken verlegt, um die Belüftung der einzelnen Scheiben sowie die Innenraumbeheizung sicherzustellen.

Aus lufttechnischer Sicht ist die im Dach des Kabinenfahrzeugs angeordnete Anlage im Grunde besser: Es bestehen kürzere Wege zur Belüftung der Scheibe, und es läßt sich eine Kompaktanlage mit allen gewünschten Funktionen realisieren. Nachteilig ist jedoch die durch die Dachanlage bedingte Einschränkung der Kopffreiheit des Fahrers, teilweise auch die Einschränkung des Sichtfeldes, sowie die Gewichtsbelastung des Dachaufbaus mit der Heizungs- und Belüftungsanlage.

Dennoch ist häufig eine Dachanlage gewählt worden, denn die beengten Verhältnisse im unteren Bereich der Kabine erforderten vielfach eine komplizierte Verlegung der Luftleitungen, die als Schläuche, aber auch als feste Kunststoffrohre, ausgebildet sein können. Auch störte die - bei den häufig anzutreffenden vergleichsweise großen Scheiben erforderliche - Vielzahl von Düsenmundstücken den häufig gewünschten funktionell-nüchternen Ein druck des Bedienfelds der Kabine.

Insbesondere bei Baumaschinenkabinen, deren Innenräume teilweise einer erheblichen Belastung durch Verschmutzungen grober Art unterliegen, wirkten die aufgesetzten Düsenmundstücke am unteren Rand der Windschutzscheibe stets in großem Ausmaß als Schmutzfänger, so daß man dort zur Dachanlage übergegangen ist und dabei in Kauf genommen hat, daß die unteren Seitenscheiben, die sich im Fußbereich des Fahrers fast bis zum Boden der Kabine erstrecken, vom Dachluftstrom fast nicht mehr erreicht werden können.

Ferner ist es für den Bereich von Personenkraftfahrzeugen an sich bekannt, vergleichsweise breite und auch tiefliegende Düsenmundstücke vorzusehen, die sich, wie beispielsweise die aus der US-PS 46 04 946 bekannten Defrosterdüse, über die gesamte Breite der Windschutzscheibe erstrek-

ken. Diese bekannten Düsen eignen sich jedoch nicht für die Belüftungsverhältnisse, wie sie bei Kabinenfahrzeugen erforderlich ist.

Daher ist es Aufgabe der Erfindung, eine Heizungs-, Belüftungs-und/oder Klimatisierungsvorrichtung gemäß dem Oberbegriff von Anspruch 1 zu schaffen, mit welcher mit überdies einfachen Mitteln auch die unteren Seitenscheiben der Kabine belüftet werden können, die zudem wenig schmutzanfällig ist und optisch nicht hervorsticht.

Diese Aufgabe wird erfindungsgemäß durch Anspruch 1 gelöst. Vorteilhafte Weiterbildungen ergeben sich aus den Unteransprüchen.

Besonders günstig an dem erfindungsgemäßen Druckverteilraum ist es, daß man hierdurch mit sehr einfachen Mitteln eine den Erfordernissen entsprechende Aufteilung der ausgeblasenen Luftmengen erzielen kann. Wenn beispielsweise ein Drittel der gesamten Spaltlänge sich oben und je ein Drittel seitlich, also im wesentlichen vertikal, erstreckt, ergibt sich automatisch eine entsprechende Luftverteilung zur Windschutzscheibe bzw. zu den Seitenscheiben.

Zum anderen erhält man durch den im wesentlichen U-förmigen Spalt eine ziemlich große Ausströmlänge bei vergleichsweise geringem Ausströmquerschnitt, so daß die Strömungsgeschwindigkeit entsprechend hoch - und damit die Tragweite entsprechend gut - ist. Durch die Ausgestaltung des doch großflächigen Luftverteilraums wird verhindert, daß die von dem Gebläse geförderte Luftströmung den Druckverteilraum nur in gerader Richtung durchtritt und dementsprechend nur oben austritt. Zudem kann der Druckverteilraum dann platzsparend zwischen Konsole und Spritzwand angebracht sein, wobei es besonders günstig ist, daß der erfindungsgemäße Spalt verdeckt angeordnet und wenig verschmutzungsanfällig ist, denn erfindungsgemäß können aufgesetzte Düsenmundstücke vermieden werden.

Dennoch ist die lufttechnische Beaufschlagung der Scheiben so gut wie bei einer Dachanlage und im Bereich der Seitenscheiben sogar besser. Man kann den Spalt insbesondere im unteren seitlichen Bereich mit Luftleitelementen bestücken, die einen überproportionalen Anteil der austretenden Luftmenge weit nach unten ziehen.

Gemäß einem besonders günstigen Aspekt der Erfindung läßt sich damit auch eine Rückenbeheizung des Fahrers sicherstellen. Die seitlich nach unten/hinten geblasene warme Luft steigt nämlich weiter hinten völlig zugfrei auf.

Es versteht sich, daß die Form des erfindungsgemäßen Druckverteilraumes mit dem erfindungsgemäßen Spalt an die Konsolenform angepaßt werden kann. Zweckmäßig werden die für die Beschaltung der Konsole erforderlichen Kabel und dgl. unterhalb des Druckverteilraums je aufgeteilt im Seitenbereich entlanggeführt, so daß keine gegenseitige Funktionsbeeinträchtigung von Konsole und Druckverteilraum vorliegt.

Erfindungsgemäß besonders günstig ist es, wenn der Druckverteilraum von zwei einander gegenüberliegenden Luftverteilschalen begrenzt ist, die zum Spalt hin muschelartig konvergieren. Diese Luftverteilschalen können sehr leicht montiert werden, indem sie zunächst aneinander eingerastet werden und dann zweckmäßigerweise von unten in eine Aufnahmeausnehmung zwischen Konsole und Spritzwand eingeschoben und dort gegebenenfalls ebenfalls eingeschnappt werden. Die Luftbeaufschlagung des Druckverteilraums erfolgt zweckmäßigerweise von unten, wobei sich eine flache und in ihrer Tiefe dem Druckverteilraum angepaßte Luftleitung anbietet, die vom Gebläse beaufschlagt wird.

Die aus Gebläse, Wärmetauscher und gegebenenfalls Verdampfer bestehende Einheit kann in an sich bekannter Weise entweder unter dem Fahrersitz angeordnet oder gegebenenfalls als Unterflureinheit ausgeführt sein.

Es versteht sich, daß die Erfindung nicht auf die Verwendung mit separaten Front- und Seitenscheiben beschränkt ist. Vielmehr eignet sie sich auch besonders für Baumaschinen, bei denen sich im seitlichen unteren Bereich der Spritzwand ebenfalls Scheiben befinden, die nach vorne weisen, sowie bei solchen Baumaschinen, bei denen diese beiden seitlichen Frontscheiben zusammen mit der Windschutzscheibe zu einer Scheibe vereint sind.

Im Falle der Verwendung in Verbindung mit derartigen Kabinenfahrzeugen ist es auch möglich, den Spalt nahezu kreisförmig zu gestalten und lediglich ein vergleichsweise kleines Segment für die Luftversorgung auszusparen.

Die Verteilung der Luft in der gewünschten Weise läßt sich in weiten Bereichen durch die entsprechende Auslegung der Spalt form, aber auch durch Luftleitelemente beeinflussen, die sich quer zum Spalt erstrecken. Es ist nicht erforderlich, daß sich alle Elemente über die gesamte Spaltbreite erstrecken. Vielmehr kann es günstig sein, Luftleitfahnen an einer der Luftverteilschalen anzuspritzen und sich über etwa ein Drittel bis zwei Drittel der Spaltbreite erstrecken zu lassen.

Gemäß einem weiteren vorteilhaften Aspekt der Erfindung sind die Luftleitvorrichtungen in gleichmäßigen Abständen über die Länge des Spaltes verteilt und dienen hiermit zugleich als Eingriffssicherung, wie auch zur Abstützung mindestens der Luftverteilschalen aneinander, so daß gewünschtenfalls eine konstante Spaltbreite über die gesamte Spaltlänge herstellbar ist.

Obwohl bevorzugt, ist es nicht erforderlich, daß der Spalt ungeteilt U-förmig verläuft. Vielmehr kann es sowohl aus lufttechnischen als auch aus befestigungstechnischen Gründen sinnvoll sein, an den oberen äußeren Ecken Teilungen vorzunehmen und dort zusätzliche Abstützmaßnahmen für die Konsole vorzusehen. Es versteht sich, daß die Spaltbreite ohne weiteres an die gewünschten Strömungsverhältnisse anpaßbar ist, so daß zweckmäßigerweise bei einer großen Spaltlänge und vergleichsweise geringem Luftvolumen die Spaltbreite geringer bemessen wird.

Gemäß einer weiteren, vorteilhaften Ausgestaltung lassen sich in der schaftförmigen, den Druckverteilraum mit Luft versorgenden Luftleitung eine oder mehrere Schwenkklappen mit separaten Austrittsöffnungen anbringen, mit denen ein Luftstrom direkt auf den Fahrer richtbar ist. Gewünschtenfalls kann in gleicher Weise eine Fußraum-Zusatzbelüftung realisiert werden.

Die erfindungsgemäßen, vergleichsweise großflächigen Luftverteilschalen lassen sich mit geringem Aufwand im Kunststoff-Spritzgußverfahren herstellen. Zur Verminderung des erforderlichen Spritzdrucks, wie auch zur Realisierung mit vergleichs weise kleinen Spritzmaschinen, kann es günstig sein, die Luftverteilschalen entlang der Mittenachse zu teilen, so daß die Luftverteilschalen-Hälften je spiegelsymmetrisch zueinander sind. Zur besseren Ausspritzung der Luftleitelemente kann es ferner sinnvoll sein, eine weitere Teilung der Halbschalen in Spaltnähe vorzusehen, so daß die Luftleitelemente exakt ausgerichtet mit guter Spritzqualität angespritzt werden können.

Weitere Einzelheiten, Vorteile und Merkmale ergeben sich aus der nachfolgenden Beschreibung eines Ausführungsbeispiels der Erfindung anhand der Zeichnungen.

Es zeigen:

Fig. 1 eine teilweise geschnittene Seitenansicht der erfindungsgemäßen Heizungs-, Belüftungs- und/oder Klimatisierungsvorrichtung in einer ersten Ausführungsform;

Fig. 2 eine schematische Ansicht von hinten auf die Ausführungsform gemäß Fig. 1, wobei die Konsole des Kabinenfahrzeugs entfernt wurde;

Fig. 3 die Luftverteilung der erfindungsgemäßen Heizungs-, Belüftungs- und/oder Klimatisierungsvorrichtung in der Darstellung von hinten auf die Frontpartie der Kabine geseheni und

Fig. 4 eine Darstellung der Luftverteilung in der Kabine, gemäß Fig. 3, jedoch in der Draufsicht von oben.

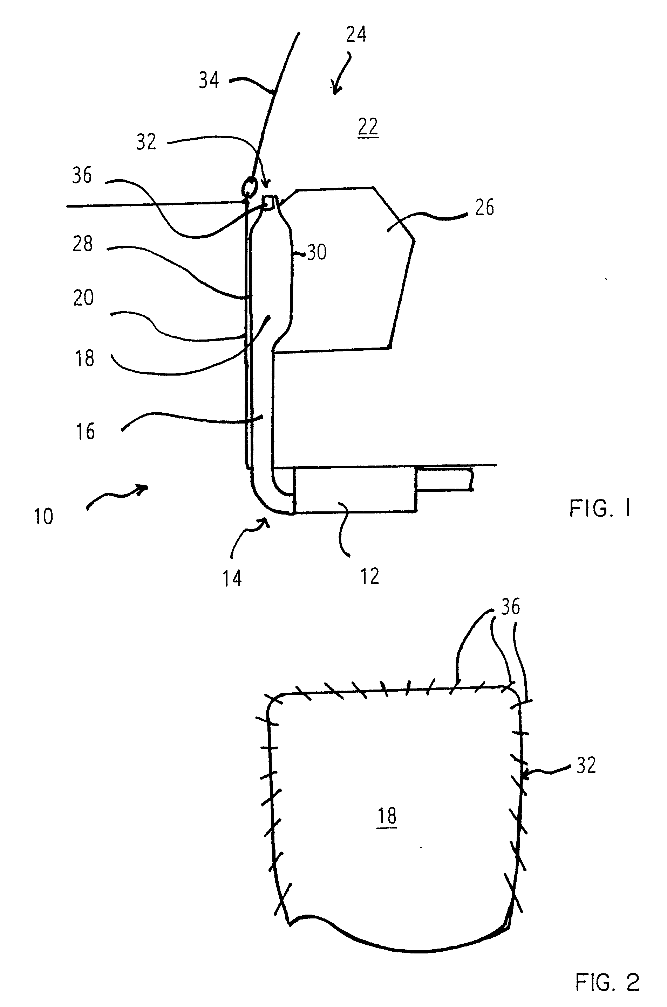

Eine erfindungsgemäße Heizungs-, Belüftungs- und/oder Klimatisierungsvorrichtung 10 weist ein Gebläse 12 auf, das mit Umluft und/oder Frischluft versorgt wird und die Umluft und/oder Frischluft über einen Wärmetauscher und/oder einen Verdampfer leitet, die in Fig. 1 nicht im einzelnen dargestellt sind. Das Gebläse 12 ist an einen Druckkanal 14 angeschlossen, der eine Luftleitung 16 umfaßt, die in einen Druckverteilraum 18 mündet. Der Druckverteilraum 18 erstreckt sich im wesentlichen vertikal und seitlich zwischen einer Spritzwand 20, einer Kabine 22 eines Fahrzeugs 24 und einer Konsole 26 des Fahrzeugs 24, die verschiedene Bedienelemente, Anzeigeinstrumente und dgl. trägt.

Der Druckverteilraum 18 ist vergleichsweise flach und von zwei einander gegenüberliegenden und im wesentlichen muschelförmig ausgestalteten Luftverteilschalen 28 und 30 begrenzt. Es mündet in einem Spalt 32, der, wie es aus Fig. 2 ersichtlich ist, im wesentlichen in Form eines umgedrehten U umlaufend um den Druckverteilraum 18 ausgebildet ist.

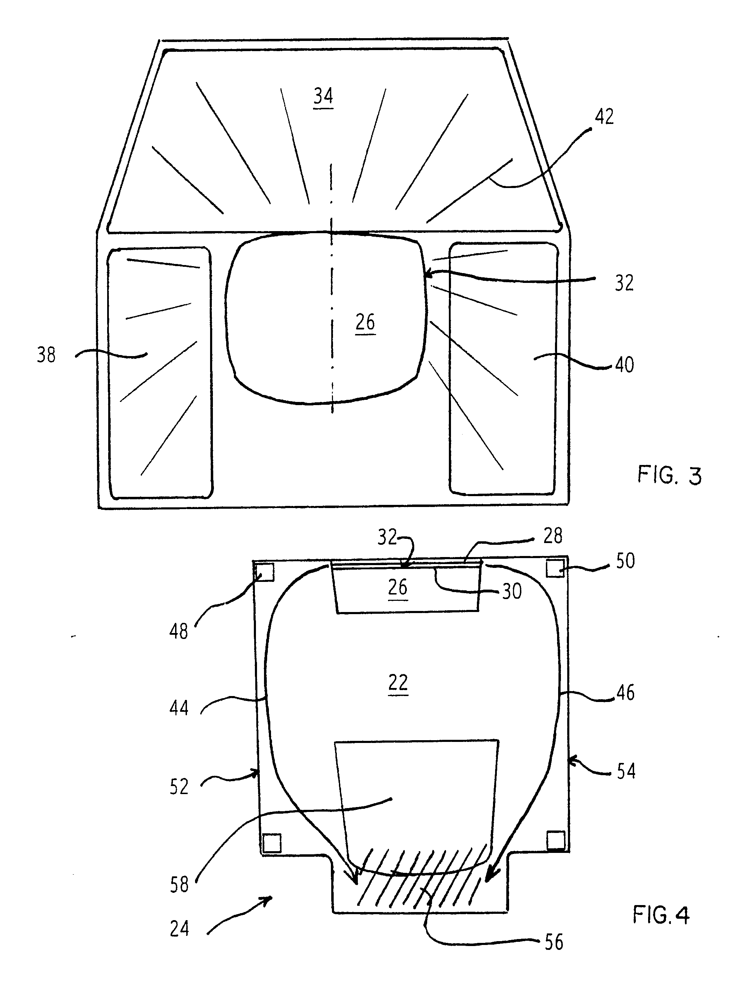

Die Luftverteilschalen 28 und 30 laufen in den spaltnahen Bereichen aufeinander zu, so daß die dort austretende Luftströmung im Bereich des Spalts 32 eine kontinuierliche Beschleunigung erfährt und mit hoher Austrittsgeschwindigkeit auf eine Windschutzscheibe 34 trifft, sowie auf die in Fig. 3 dargestellten weiteren Scheiben.

Der Druckkanal 14 umfaßt somit die Luftleitung 16, den Druckverteilraum 18 und den als Düseneinrichtung wirkenden Spalt 32.

Der Spalt 32 ist mit Luftleitelementen 36 versehen, die sich zwischen den Luftverteilschalen 28 und 30 erstrecken und in der aus Fig. 2 ersichtlichen Weise die austretende Luftströmung etwas umlenken.

Aus Fig. 2 ist ersichtlich, daß die austretende Luftströmung über die Luftleitelemente 36 fächerförmig aufgeweitet wird. Die seitlich unten angeordneten Luftleitelemente 36 erstrecken sich hierbei ziemlich weit nach unten und führen vergleichsweise große Luftmengen im vorderen Bodenbereich der Kabine zu. Zudem sind sie - auch im Spalt 32 - vergleichsweise lang gehalten, so daß die dort austretende Luftströmung eine Richtungsstabilisierung erfährt.

Es versteht sich, daß die Auslegung des Druckverteilraums 18, und dementsprechend die geometrische Gestaltung des Spalts 32, von der jeweils vorliegenden Kabine abhängt und sich zweckmäßig an der Form der Konsole orientiert. So ist es beispielsweise ohne weiteres möglich, die erfindungsgemäße Heizungs-, Belüftungs-und/oder Klimatisierungsvorrichtung 10 in Verbindung mit einer im wesentlichen trapezförmigen Konsole einzusetzen. Es ist jedoch günstig, den Spalt im wesentlichen bündig mit den Konsolenseitenwänden enden zu lassen, da diese Lösung die geringste Verschmutzungsanfälligkeit zeigt und zudem optisch nicht stört.

Wie aus Fig. 3 ersichtlich ist, lassen sich mit der erfindungsgemäßen Heizungs-, Belüftungs- und/oder Klimatisierungsvorrichtung 10 besonders günstig auch Kabinenfahrzeuge ausstatten, die praktisch über drei Frontscheiben verfügen. Neben der Windschutzscheibe 34 sind bei derartigen Kabinenfahrzeugen seitliche Frontscheiben 38 und 40 vorgesehen, die sich seitlich neben der Konsole 26 nach unten erstrecken und der besseren Beobachtung des Arbeitsgeschehens durch den Fahrer dienen.

Während diese Scheiben ebenfalls mit einer Dach-Belüftungsanlage schlecht erreichbar waren, ist es erfindungsgemäß besonders günstig, daß der seitlich aus dem Spalt 32 austretende Luftstrom unmittelbar auf diese seitlichen Frontscheiben gerichtet werden kann. Es versteht sich aber, daß es bei Kabinenfahrzeugen ohne derartige seitliche Frontscheiben günstig ist, die unteren Seitenscheiben, die sich seitlich der Beine des Fahrers erstrecken, mit den seitlich aus dem Spalt 32 austretenden Luftströmungen zu beaufschlagen.

Stets wird die Luftströmung, durch die Wirkung der Luftleitelemente 36 unterstützt, fächerförmig aufgeweitet, so daß sich eine Vielzahl von Einzelluftströmen 42 ergibt.

Wie aus Fig. 4 ersichtlich ist, werden die seitlich austretenden Luftströme 44 und 46 in diesem Ausführungsbeispiel im Bereich vorderer Eckpfosten 48 und 50 nach hinten umgelenkt, so daß sie in der Nähe des Bodens an Seitenwänden 52 und 54 entlangstreifen, die je teilweise von Türen des Kabinenfahrzeugs 24 gebildet sein können, und steigen in einem mit dem Bezugszeichen 56 gekennzeichneten Bereich auf, wenn es sich um warme Luftströme handelt.

Hierbei ist es besonders günstig, daß der Bereich 56 etwa im Bereich der Rückenlehne des Fahrersitzes 58 vorgesehen ist, da so eine angenehm zugfreie Erwärmung der Kabine 22 stattfindet.

Wie aus Fig. 4 ersichtlich ist, kann die eigentliche Mündung des Spaltes 32 an die Erfordernisse angepaßt werden. Bei schmaleren Kabinen 22, in welchen unmittelbar seitlich neben der Konsole 26 eine Luftumlenkung nach hinten erfolgen muß, ist es möglich, die vordere Luftverteilschale 28 gegenüber der hinteren Luftverteilschale 30 vorspringen zu lassen, so daß die Luftströmungen 44 und 46 bereits eine Geschwindigkeitskomponente nach hinten erhalten.

Werkzeugtechnisch ist es besonders günstig, wenn die Luftleitelemente lediglich an einer der beiden Luftverteilschalen angeformt sind. Hierdurch lassen sich zum einen die Werkzeugkosten reduzieren, und zum anderen wird die sich aus der Zusammenfassung beider Luftverteilschalen ergebende Einheit unkritischer hinsichtlich etwaiger Herstellungstoleranzen, da beispielsweise ein leichtes Verschieben der Luftverteilschalen in Richtung des Spaltes 32 gegeneinander keine strömungstechnischen Nachteile mit sich bringen würde.

## Ansprüche

1. Heizungs-, Belüftungs- und/oder Klimatisierungsvorrichtung eines eine Kabine aufweisenden Kraftfahrzeugs, mit einem Gebläse, einem Druckkanal und einer Düseneinrichtung zur Belüftung der Frontscheibe von Seitenfenstern, dadurch **gekennzeichnet,** daß der Druckkanal (14) durch einen sich entlang der Vorderwand der Kabine (22) erstreckenden, flachen Druckverteilraum (18) gebildet ist, der oben und seitlich in einem durchgehenden oder geteilten Spalt (32) ausläuft.

2. Heizungs-, Belüftungs- und/oder Klimatisierungsvorrichtung nach Anspruch 1, dadurch gekennzeichnet, daß der (32) Spalt die Düseneinrichtung bildet und eine der Frontscheibe (34) und/oder den Seitenscheiben zugewandte Luftaustrittsrichtung aufweist.

3. Heizungs-, Belüftungs- und/oder Klimatisierungsvorrichtung nach einem der vorhergehenden Ansprüche, dadurch gekennzeichnet, daß der Spalt (32) eine Mehrzahl von Luftleitelementen (36) aufweist, die sich quer zur Längsrichtung des Spaltes (32) erstrecken und von denen die im unteren seitlichen Bereich des Spalts (32) angeordneten schräg nach unten weisen.

4. Heizungs-, Belüftungs- und/oder Klimatisierungsvorrichtung nach einem der vorhergehenden Ansprüche, dadurch gekennzeichnet, daß der Druckverteilraum (18) von einer großflächigen, im wesentlichen muschelförmigen Luftverteilschale (30) abgedeckt ist, die an den Druckkanal (14) angeschlossen ist und den Druckverteilraum (18) der Spritzwand (20) gegenüberliegend begrenzt.

5. Heizungs-, Belüftungs- und/oder Klimatisierungsvorrichtung nach einem der vorhergehenden Ansprüche, dadurch gekennzeichnet, daß der Druckverteilraum (18) von zwei im wesentlichen symmetrisch zueinander geformten Luftverteilschalen (28, 30) begrenzt ist, zwischen denen sich der Spalt (32) erstreckt und die im Bereich des Spalts (32) in regelmäßigen Abständen voneinander angeordnet sind.

6. Heizungs-, Belüftungs- und/oder Klimatisierungsvorrichtung nach einem der vorhergehenden Ansprüche, dadurch gekennzeichnet, daß der Druckverteilraum (18) zum Spalt (32) hin konvergierend ausgebildet ist und im Spalt (32) angeordnete Luftleitelemente (36) zugleich als Abstandhalter dienen.

7. Heizungs-, Belüftungs- und/oder Klimatisierungsvorrichtung nach einem der vorhergehenden Ansprüche, dadurch gekennzeichnet, daß der Spalt (32) des Druckverteilraumes (36) oben in unmittelbarer Nähe des unteren Randes der Windschutzscheibe (34) endet und seitlich unterhalb der Höhe der Windschutzscheibe (34) im wesentlichen am seitlichen Rand der in das Fahrzeug (24) eingebauten Konsole (26) endet.

8. Heizungs-, Belüftungs- und/oder Klimatisierungsvorrichtung nach einem der vorhergehenden Ansprüche, dadurch gekennzeichnet, daß der Druckverteilraum (18) zwischen der in der Kabine (22) eingebauten Konsole (26) und der Spritzwand (20) des Fahrzeugs (24) angeordnet ist und unten mit dem Fuß der Konsole (26) abschließt.

9. Heizungs-, Belüftungs- und/oder Klimatisierungsvorrichtung nach einem der vorhergehenden Ansprüche, dadurch gekennzeichnet, daß eine vordere Luftverteilschale (28) gegenüber einer hinteren Luftverteilschale (30) im seitlichen Bereich des Spalts (32) vorspringt und der Spalt so nach hinten und/oder außen weist.

10. Heizungs-, Belüftungs- und/oder Klimatisierungsvorrichtung nach einem der vorhergehenden Ansprüche, dadurch gekennzeichnet, daß zwei den Druckverteilraum (18) umschließende Luftverteilschalen (28, 30) aneinander eingerastet gehalten sind.

11. Heizungs-, Belüftungs- und/oder Klimatisierungsvorrichtung nach einem der vorhergehenden Ansprüche, dadurch gekennzeichnet, daß der Druckverteilraum (18) von Luftverteilschalen (28, 30) umgeben ist, die aus insbesondere spritzgegossenem Kunststoff bestehen und insbesondere längs der Mittelebene symmetrisch geteilt sind.

12. Heizungs-, Belüftungs- und/oder Klimatisierungsvorrichtung nach Anspruch 11, dadurch gekennzeichnet, daß ein oberer Bereich der Luftverteilschalen (28, 30), der dem Spalt (32) benachbart ist, als separates Teil mittels Spritzguß hergestellt ist, das einstückig angespritze Luftleitelemente (36) aufweist.

13. Heizungs-, Belüftungs- und/oder Klimatisierungsvorrichtung nach einem der vorhergehenden Ansprüche, dadurch gekennzeichnet, daß in dem Spalt (32) angeordnete Luftleitelemente (36) diesen um weniges überragen und sich im unteren Bereich des seitlichen Teils des Spalts (32) im wesentlichen nach unten erstrecken.

14. Heizungs-, Belüftungs- und/oder Klimatisierungsvorrichtung nach einem der vorhergehenden Ansprüche, dadurch gekennzeichnet, daß das Gebläse (12) von dem Druckverteilraum (18) beabstandet angeordnet ist und über eine insbesondere flach-rechteckige Luftleitung (16), die sich an der Spritzwand (20) entlang nach oben erstreckt, das Gebläse (12) mit dem Druckverteilraum (18) verbunden ist.

15. Heizungs-, Belüftungs- und/oder Klimatisierungsvorrichtung nach einem der vorhergehenden Ansprüche, dadurch gekennzeichnet, daß die Luftleitelemente (36) lediglich an einer der Luftverteilschalen (28; 30) einstückig angeformt sind und sich durch den Spalt (32) auf die andere Luftverteilschale (30; 28) zu erstrecken.

FIG. 1

FIG. 2

FIG. 3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 8, no. 182 (M-319)(1619) 22 August 1984, & JP-A-59 73317 (NISSAN JIDOSHA) 21 Oktober 1982, * das ganze Dokument * | 1 | B60H1/24 B60S1/54 |
| Y | | 2, 3, 4, 5, 9, 10 | |
| A | | 11, 13 | |
| | --- | | |
| Y | EP-A-271706 (AURORA KONRAD) * Seite 2, Zeilen 1 - 37; Ansprüche 1-6; Figuren * | 2, 3 | |
| A | | 5, 12 | |
| | --- | | |
| Y | US-A-3343473 (GILLIK ET AL) * Spalte 1, Zeilen 21 - 51 * | 4 | |
| A | * Spalte 5, Zeilen 20 - 48; Anspruch 1; Figuren * | 1, 6 | |
| | --- | | |
| Y | FR-A-2238607 (AURORA KONRAD) * Seite 1, Zeile 1 - Seite 2, Zeile 31; Figuren * | 5, 9 | RECHERCHIERTE SACHGEBIETE (Int. Cl.5) |
| A | | 3, 6, 10, 11, 15 | B60H B60S |
| | --- | | |
| Y | DE-A-2847678 (DAIMLER-BENZ AG) * Seite 2, Zeilen 1 - 14 * | 10 | |
| A | * Seite 4, Zeilen 1 - 24; Figuren * | 3, 5, 15 | |
| | --- | | |
| A | US-A-4467706 (STEIGER TRACTOR INC) * Spalte 1, Zeilen 1 - 60 * * Spalte 3, Zeilen 40 - 62; Figuren * | 1, 2, 9, 11 | |
| | --- | | |
| A | FR-A-2103161 (BREITSCHWERDT ET AL) * das ganze Dokument * | 1, 2, 11, 13 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 23 FEBRUAR 1990 | BOLJANAC T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)